Europäisches Patentamt

European Patent Office

Office européen des brevets

(11) Publication number: **0 363 905**
**A2**

# EUROPEAN PATENT APPLICATION

(21) Application number: **89118811.2**

(22) Date of filing: **10.10.89**

(51) Int. Cl.⁵: **G05B 19/05**

(30) Priority: **13.10.88 JP 255779/88**

(43) Date of publication of application:
**18.04.90 Bulletin 90/16**

(84) Designated Contracting States:
**DE FR GB SE**

(71) Applicant: **Kabushiki Kaisha Toshiba
72, Horikawa-cho Saiwai-ku
Kawasaki-shi(JP)**

(72) Inventor: **Murai, Michio Intellectual Property
Division
K.K. Toshiba 1-1 Shibaura 1-chome
Minato-ku
Tokyo 105(JP)**

(74) Representative: **Henkel, Feiler, Hänzel &
Partner
Möhlstrasse 37
D-8000 München 80(DE)**

(54) I/O Apparatus for programmable controller.

(57) In a system for exchanging data between a programmable controller including a CPU, a memory, and a standard interface (45) connected to the CPU through an inherent bus, and a user circuit connected to the inherent bus of the programmable controller through the standard interface, the standard interface includes a bidirectional data control circuit (55) having an internal memory accessible from both the CPU and the user circuit (47), an arbitrator (53) for executing an access request form the CPU prior to an access request form the user circuit (47) when the access request from the CPU to the internal memory and the access request from the user circuit (47) contend with each other, and a continuous data guarantee circuit (51) for stopping the access request from the user circuit until the CPU reads or writes data consisting of a plurality of words from or in the user circuit in response to the access request from the CPU and address data.

F I G. 3

EP 0 363 905 A2

## I/O apparatus for programmable controller

The present invention relates to a process I/O apparatus for a programmable controller and, more particularly, to an I/O apparatus for a programmable controller which has a standard interface circuit for allowing design of a user circuit even if a user does not know a specification of the programmable controller.

In a programmable controller or the like, a system bus is often used when a user circuit which is originally designed by a user is connected to the controller.

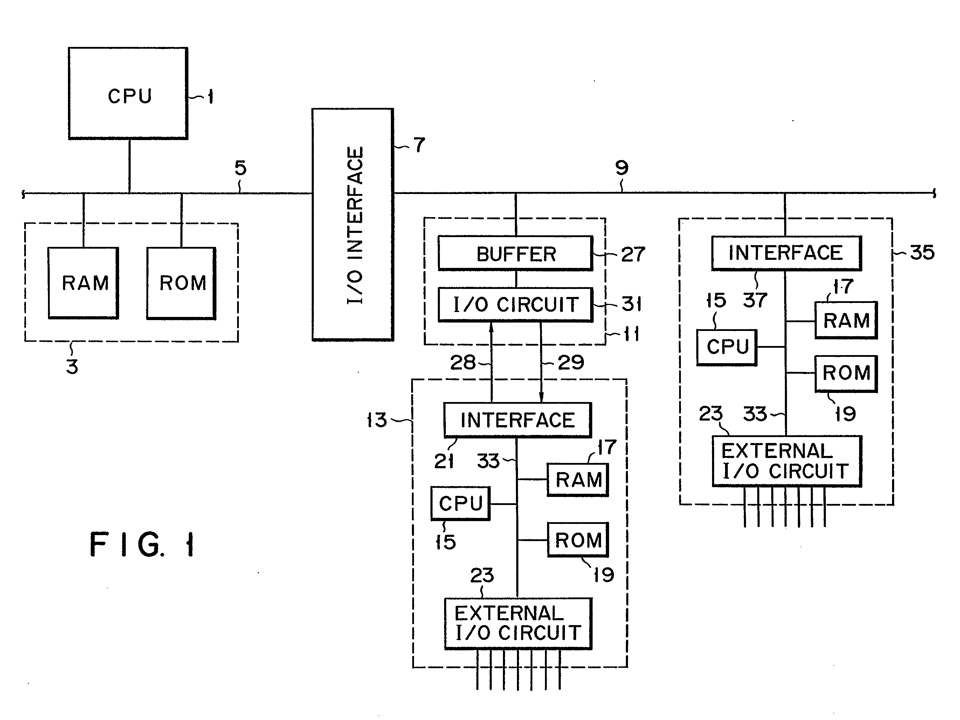

Fig. 1 is a block diagram of a conventional I/O apparatus for a programmable controller. An operation unit, including a CPU (central processing unit) 1, a main memory 3, and an internal bus 5 for connecting these units, inputs or outputs through an I/O interface 7 data with respect to a process I/O apparatus 11 connected to an I/O bus 9. Data are exchanged between a user circuit 13 and the programmable controller through the process I/O apparatus 11.

The user circuit is produced by a user in accordance with an original specification in order to realize various data processing operations. The user circuit comprises an analog or digital circuit. As shown in Fig. 1, a digital user circuit often includes a CPU 15, a RAM 17, a ROM 19, an external I/O circuit 23 for controlling interface between various controlled apparatuses which are connected to external devices of the user circuit 13, such as an NC (numeric control) apparatus, and the CPU 15, and an interface 21 for controlling interface between the user circuit 13 and the programmable controller.

Conventionally, a user circuit has been designed using two types of methods. In the first method, a manufacturer provides the operation unit (the CPU 1, the main memory 3, and the internal bus 5), the I/O interface 7, the inherent I/O bus 9, and the process I/O apparatus 11. A user receives a specification of the process I/O apparatus 11 from the manufacturer, and designs an original user circuit in accordance with the specification. In this case, however, when the CPU 15 in the user circuit communicates with the CPU 1 in the programmable controller, the communication must be performed through the process I/O apparatus 11. The process I/O apparatus 11 includes a buffer 27 and an I/O circuit 31, and input and output signals 28 and 29 with respect to the I/O circuit 31 are unidirectional signals. For this reason, the interface 21 is designed to convert the output signal 29 from the I/O circuit 31 into a bidirectional signal and to output the converted signal to an internal bus 33, or to convert the signal on the internal bus 33 into the unidirectional signal 28 and to output the converted signal to the I/O circuit 31. In this case, it is convenient for the manufacturer since they need to provide a specification for only the process I/O apparatus 11 to the user. However, a transmission speed of data is undesirably low. For example, when the CPU 1 in the programmable controller is constituted by an 8-bit CPU, and control data supplied to the user circuit 13 is 40-bit data using an ASCII code, 5-byte control data must be transmitted to the user circuit 13. In this case, data must be transmitted through the I/O circuit 31 and the interface 21 in units of bytes, and hence an effective data exchange operation cannot be achieved.

In the second method, a user circuit 35 is directly connected to the I/O bus 9. In this method, since the process I/O apparatus 11 is not inserted between the I/O bus 9 and the user circuit 35, a transmission speed of data is improved. In order to directly connect the user circuit 35 to the I/O bus 9, however, an interface circuit 37 must be designed in accordance with the specification of the programmable controller. For this purpose, the user must know all specifications of the CPU 1, the main memory 3, the internal bus 5, the I/O interface 7, and the I/O bus 9. It is difficult to design the circuits, and a total test must be performed, thus requiring labor. In addition, when the manufacturer informs all the specifications of the programmable controller to the user, technical know-how may be undesirably disclosed. If a failure occurs when the user circuit is connected to the programmable controller, it is necessary to make clear whether the manufacturer or the user is responsible.

It is an object of the present invention to provide an I/O apparatus for a programmable controller for allowing high-speed exchange of data between the programmable controller and a user circuit which is produced by a user, and design of an original user circuit by the user without informing all specifications of the programmable controller to the user.

In order to achieve the above object, there is provided a system for exchanging data between a programmable controller including a central processing unit, a memory, and an I/O apparatus connected to the CPU through an inherent bus, and a user circuit connected to the inherent bus of the programmable controller through the I/O apparatus, wherein the I/O apparatus comprises a bidirectional data control means having an internal memory accessible from both the CPU and the user circuit, an arbitrating means for executing an access request from the CPU prior to an access request from the user circuit when the access requests from the CPU and the user circuit contend with each other, and a continuous data guarantee

2

means for continuously executing the access request from the CPU in response to the access request from the CPU and address data correlated with the access.

According to the present invention, a standard interface circuit is arranged, and a user is provided with a specification of the standard interface circuit. Therefore, the user can design an original circuit without knowing all the specifications of the programmable controller.

The I/O apparatus for the programmable controller according to this invention can be applied to, e.g., a LAN (local area network), an interface module or the like.

This invention can be more fully understood from the following detailed description when taken in conjunction with the accompanying drawings, in which:

Fig. 1 is a block diagram of a conventional I/O apparatus for a programmable controller;

Fig. 2 is a block diagram of an I/O apparatus for a programmable controller according to the present invention;

Fig. 3 is a block diagram showing a detailed arrangement of a standard interface shown in Fig. 2;

Figs. 4A through 4E are timing charts of various signals during a read operation performed by a CPU 1;

Figs. 5A through 5E are timing charts of various signals during a write operation performed by the CPU 1;

Fig. 6 is a circuit diagram showing detailed arrangements of a CPU request control circuit, a continuous data guarantee circuit, and an arbitrator, which are shown in Fig. 3; and

Figs. 7A through 7N are timing charts of signals input to or output from the various circuits shown in Fig. 6.

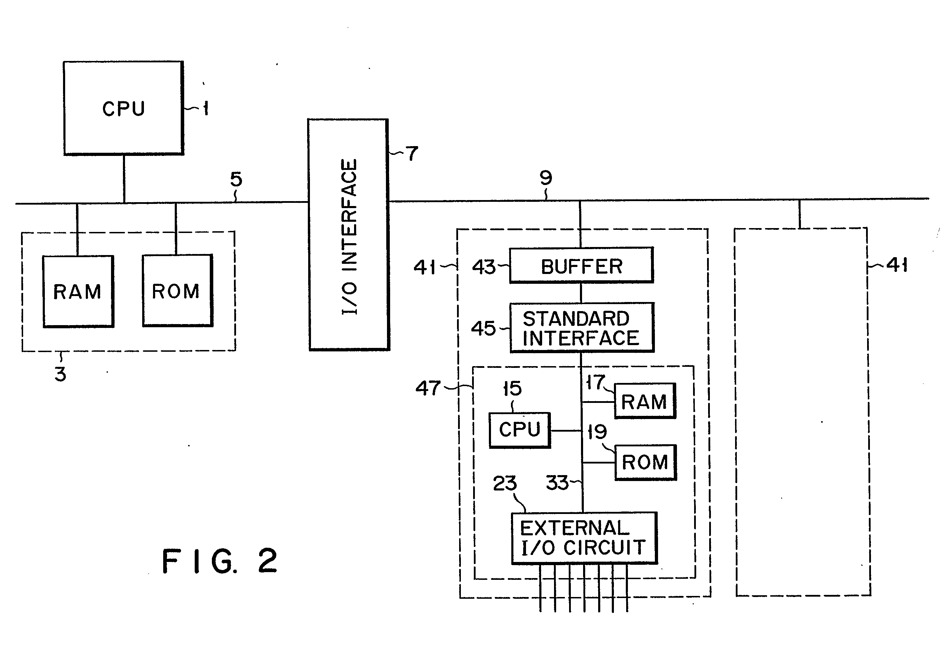

Fig. 2 is a block diagram of an I/O apparatus for a programmable controller according to the present invention. The same reference numerals in Fig. 2 denote the same parts as in Fig. 1, and a description thereof will be omitted.

As shown in Fig. 2, an I/O apparatus 41 for a programmable controller according to the present invention can incorporate a user circuit 47 having a CPU 15, a RAM 17, a ROM 19, and an external I/O circuit 23. The I/O apparatus 41 also includes a buffer 43, an inherent I/O bus 9 (which is not a standard bus such as a VME) of the programmable controller, and a standard interface 45 for exchanging data between a CPU 1 and the user circuit 47 through an I/O interface 7.

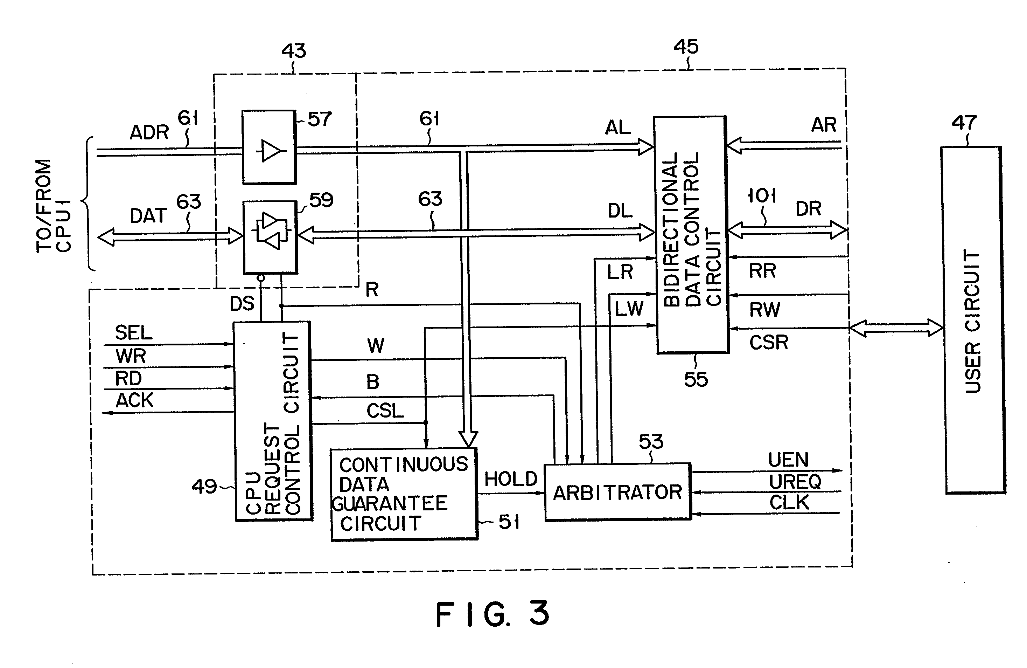

Fig. 3 is a block diagram showing a detailed arrangement of the standard interface 45 shown in Fig. 2. As shown in Fig. 3, the standard interface 45 includes a CPU request control circuit 49, a continuous data guarantee circuit 51, an arbitrator 53, a bidirectional data control circuit 55, an address buffer 57, and a data buffer 59.

When the CPU 1 accesses the bidirectional data control circuit 55, an address is supplied to the standard interface 45 through the buffer 43. The address supplied to the standard interface 45 is supplied to the bidirectional data control circuit 55 through an address bus 61 and the address buffer 57. Data is exchanged between the CPU 1 and the user circuit 47 through a data bus 63, the data buffer 59, and the bidirectional data control circuit 55.

The bidirectional data control circuit 55 is a circuit for controlling a data exchange operation between the user circuit 47 and the CPU 1. For example, a Dual Port Memory MB8421 available from FUJITSU, LTD. Japan can be applied as the bidirectional data control circuit 55. Various data and control signals input to or output from the bidirectional data control circuit 55 will be described hereinafter in detail.

The CPU request control circuit 49 supplies a control signal to various circuits in the standard interface 45 or feeds back a response signal ACK to the CPU, in response to a request of a read or write operation from the CPU 1. More specifically, the CPU 1 supplies a selection signal SEL for selecting the I/O apparatus 41, a read signal RD representing a read request with respect to the memory in the selected I/O apparatus, or a write signal WE representing a write request to the CPU request control circuit 49. The CPU request control circuit 49 feeds back the response signal ACK to the CPU 1 in response to the read or write signal RD or WR.

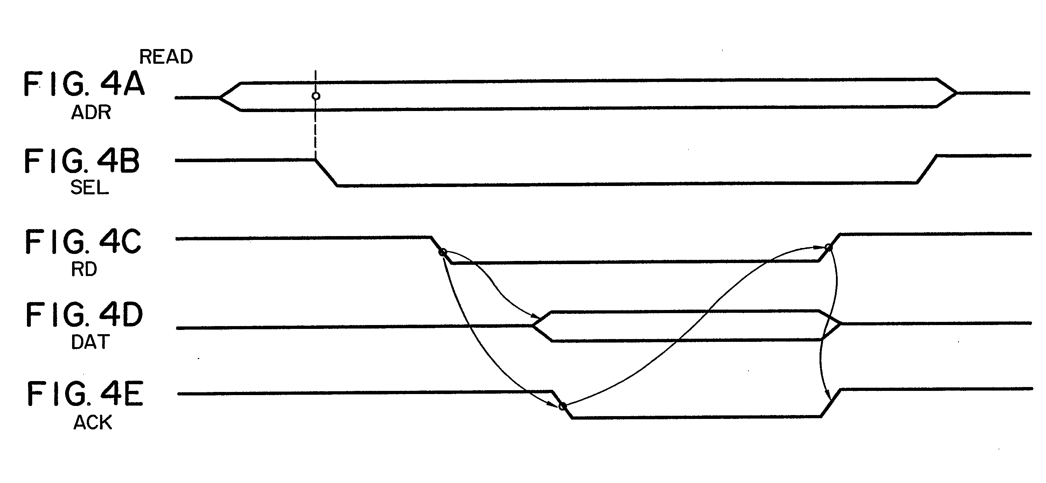

More specifically, during a read operation, as shown in Fig. 4A, the CPU 1 outputs an address signal ADR to the address buffer 57. As shown in Figs. 4B and 4C, the CPU 1 sequentially outputs the I/O apparatus selection signal SEL and the read signals RD. The CPU request control circuit 49 outputs the signal ACK shown in Fig. 4E to the CPU 1 in response to the read signal RD. As shown in Fig. 4D, data read out from the user circuit 47 is output on the data bus 63 in response to the read signal RD.

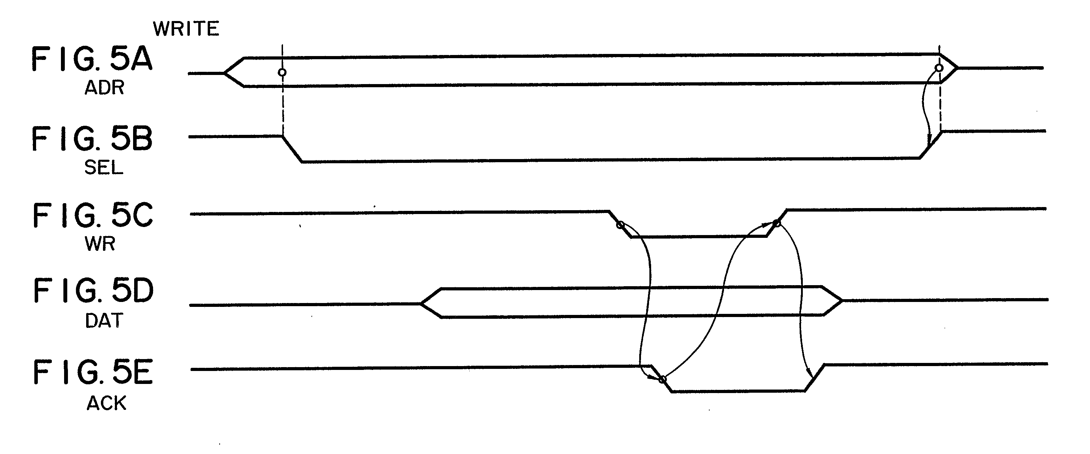

Similarly, during a write operation, the CPU 1 outputs the address signal ADR shown in Fig. 5A on the address bus 61, and outputs data DAT shown in Fig. 5D on the data bus 63. Thereafter, the CPU 1 outputs the write signal WR shown in Fig. 5C. The CPU request control circuit 49 feeds back the response signal ACK shown in Fig. 5E to the CPU 1 in response to the write signal WR.

3

When control data is supplied from, e.g., the CPU 1 to the user circuit 47, the continuous data guarantee circuit 51 prohibits access from the user circuit until transmission of the control data is completed. In general, the number of bits of control data in the programmable controller is larger than that of the CPU 1. Assume that the control data is 40-bit data, and the CPU 1 is an 8-bit CPU. When the control data is supplied using an ASCII code, 5-byte transmission must be performed. Access from the user circuit 47 is prohibited until the 5-byte transmission is completed.

The arbitrator 53 arbitrates access requests from the user circuit 47 and the CPU 1, and supplies a required control signal to the bidirectional data control circuit 55.

Various signals shown in Fig. 3 are as follows.

```
Name of Signal              Function
ADR: address from CPU 1
DAT: data output from or fetched in CPU 1
SEL: I/O apparatus selection signal
WR:  write request signal from CPU 1
RD:  read request signal from CPU 1
ACK: response signal output from CPU request
     control circuit 49 to CPU 1
DS:  signal for enabling data buffer 59 from CPU
     request control circuit 49
R:   data read signal output from CPU request
     control circuit 49 to data buffer 59 and
     arbitrator 53
W:   data write signal output from CPU request
     control circuit 49 to arbitrator 53
B:   standby signal output from arbitrator 53 to
     CPU request control circuit 49
CSL: interface circuit selection signal output
     from CPU request control circuit 49 to
     continuous data guarantee circuit 51 and
     bidirectional data control circuit 55
AL:  address of I/O apparatus supplied from
     address buffer 57 to bidirectional data
```

control circuit 55

DL: data exchanged between data buffer 59 and bidirectional data control circuit 55

LR: CPU read signal supplied from arbitrator 53 to bidirectional data control circuit 55

LW: CPU write signal supplied from arbitrator 53 to bidirectional data control circuit 55

AR: address from user circuit 47

DR: data from user circuit 47

RR: read signal from user circuit 47

RW: write signal from user circuit 47

CSR: memory selection signal from user circuit 47

HOLD: request hold signal output from continuous data guarantee circuit 51 to arbitrator 53

UEN: user access permission signal supplied from arbitrator 53 to user circuit 47

UREQ: user access request signal supplied from user circuit 47 to arbitrator 53

CLK: clock signal

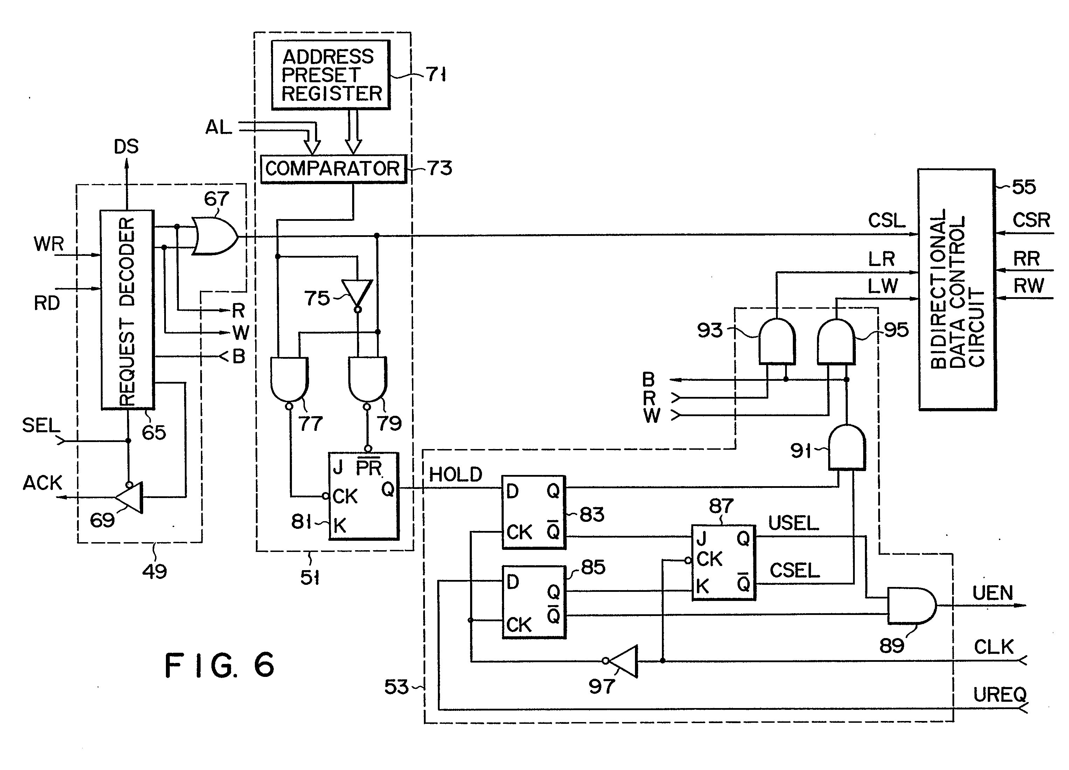

A (Fig. 6): coincidence signal from comparator 73

Fig. 6 is a circuit diagram showing detailed arrangements of the CPU request control circuit 49, the continuous data guarantee circuit 51, and the arbitrator 53 which are shown in Fig. 3. Note that address and data buses are omitted in Fig. 6 for the sake of simplicity.

The CPU request control circuit 49 includes a CPU request decoder 65, an OR gate 67, and a tri-state buffer 69. The CPU request decoder 65 receives the write or read signal WR or RD, and the selection signal SEL from the CPU 1. The selection signal SEL is also supplied to the tri-state buffer 69. The CPU request decoder 65 decodes the I/O apparatus selection signal SEL, and the write or read signal WR or RD from the CPU 1, and outputs the data read signal R or the data write signal W to the OR gate 67 and the arbitrator 53, respectively. The CPU request decoder 65 supplies the signal ACK to the tri-state buffer 69 in synchronism with the read or write signal RD or WR, and the tri-state buffer 69 outputs the signal ACK to the CPU 1 in synchronism with the selection signal SEL.

The CPU request decoder 65 also outputs the data selection signal DS to the data buffer 59. When the standby signal B is supplied from the arbitrator 53, the decoder 65 does not supply the signal ACK to the CPU 1 until the standby signal B is rendered active.

The continuous data guarantee circuit 51 includes an address preset register 71, a comparator 73, an inverter 75, two NAND gates 77 and 79, and a J-K flip-flop 81. A final address of control data supplied from the CPU 1 to the user circuit 47 is preset in the address preset register 71. The comparator 73 compares an address output from the address preset register 71 with an address supplied from the CPU 1 through the address bus 61. When the two addresses coincide with each other, the comparator 73 supplies a coincidence signal to one input terminal of the NAND gate 77, and to one input terminal of the NAND gate 79 through the inverter 75. The other input terminal of each of the NAND gates 77 and 79 receives the interface circuit selection signal CSL output from the OR gate 67 in the CPU request control circuit 49. When the write or read request signal WR or RD is supplied from the CPU 1 to the CPU request decoder 65, the signal is supplied to the J-K flip-flop 81 through the OR gate 67 and the NAND gate 79. As a result, the active signal HOLD is output from the Q output terminal of the J-K flip-flop 81 to the arbitrator 53.

The arbitrator 53 includes two D-type flip-flops 83 and 85, a J-K flip-flop 87, AND gates 89, 91, 93, and

5

95, and an inverter 97.

The signal HOLD output from the J-K flip-flop 81 in the continuous data guarantee circuit 51 is supplied to the D input terminal of the D-type flip-flop (F/F) 83. A Q output from the F/F 83 is supplied to one input terminal of the AND gate 91, and a $\overline{Q}$ output is supplied to the J terminal of the J-K flip-flop (F/F) 87. A $\overline{Q}$ output from the D-type flip-flop 85 is supplied to the K terminal of the F/F 87, and a $\overline{Q}$ output is supplied to one input terminal of the AND gate 89. The other input terminal of the AND gate 89 receives a Q output (USEL) from the F/F 87. A $\overline{Q}$ output (CSEL) from the F/F 87 is supplied to the other input terminal of the AND gate 91. The user access request signal UREQ is supplied to the D input terminal of the F/F 85. The clock signal CLK supplied from the user circuit 47 is supplied to clock terminals CK of the F/Fs 83 and 85.

An output from the AND gate 91 is supplied to one input terminal of each of the AND gates 95 and 93. The data write signal W from the CPU request decoder 65 is supplied to the other input terminal of the AND gate 95, and the data read signal R from the CPU request decoder 65 is supplied to the other input terminal of the AND gate 93. An output from the AND gate 91 is supplied to the CPU request decoder 65 as the standby signal B. Outputs from the AND gates 93 and 95 are supplied to the bidirectional data control circuit 55 as the CPU read and write signals LR and LW, respectively.

The user access request signal UREQ is active when it is set at "0". The arbitrator 53 is arranged such that the user access permission signal UEN is not rendered active when the CPU 1 outputs the read or write signal RD or WR, and the user circuit 47 outputs an access request. More specifically, when the CPU 1 outputs the write or read signal WR or RD to the CPU request control circuit 49, the CPU request decoder 65 supplies the interface circuit selection signal CSL to a preset terminal PR of the J-K flip-flop 81 through the OR gate 67 and the NAND gate 79. As a result, the request hold signal HOLD is output from the Q output terminal of the J-K F/F 81 to the D input terminal of the D-type F/F 83. As a result, a signal set at logic "0" (inactive) is supplied from the $\overline{Q}$ output terminal of the F/F 83 to the J input terminal of the J-K F/F 87.

On the other hand, the user access request signal UREQ which is set at "0" (active) is supplied from the user circuit 47 to the D input terminal of the D-type F/F 85. For this reason, a signal set at logic "0" is supplied from the Q output terminal of the D-type F/F 85 to the K input terminal of the J-K F/F 87. As a result, both J and K input terminals are set at "0", and a signal set at logic "0" is applied from the Q output terminal to the AND gate 89. Therefore, the AND gate 89 supplies an inactive user permission signal to the user circuit 47.

During a read or write operation, the read or write signal R or W is supplied from the CPU request decoder 65 to the AND gate 93 or 95, respectively. Therefore, the AND gate 93 or 95 supplies the CPU read or write signal LR or LW to the bidirectional data control circuit 55, respectively.

When the user circuit 47 outputs a user access request, and the CPU 1 does not output the write or read signal WR or RD, a signal set at logic "0" (inactive) is supplied from the Q output terminal of the J-K F/F 81 to the F/F 83. As a result, a signal set at logic "0" is supplied from the $\overline{Q}$ output terminal of the F/F 83 to the J input terminal of the J-K F/F 87, and a signal set at "1" (active) is supplied from the Q output terminal of the D-type F/F 85 to the K input terminal of the J-K F/F 87.

For this reason, the J and K input terminals are set at "1" and "0", respectively. Therefore, a signal set at logic "1" is supplied from the Q output terminal of the J-K F/F 87 to one output terminal of the AND gate 89. On the other hand, a signal set at logic "1" is supplied from the $\overline{Q}$ output terminal of the D-type F/F 85 to the other input terminal of the AND gate 89. Therefore, the AND gate 89 supplies the active user access permission signal UEN to the user circuit 47. In addition, the memory selection signal CSR, and the user read or write signal RR or RW are applied from the user circuit 47 to the bidirectional data control circuit 55. As a result, when the user read signal RR is input, the bidirectional data control circuit 55 outputs data 1 on a bus 101 (Fig. 3). When the user write signal RW is input, the bidirectional data control circuit 55 fetches the data on the bus 101.

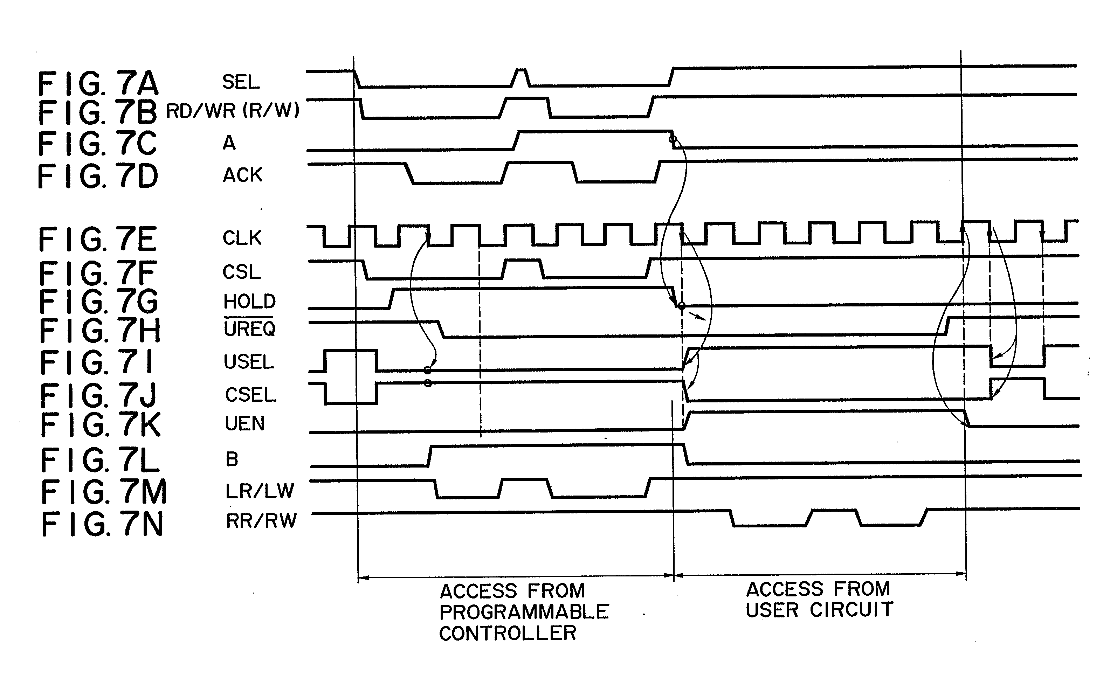

Access operations of the programmable controller and the user circuit will be described hereinafter with reference to Fig. 6, and Figs. 7A through 7N. When the programmable controller accesses the user circuit 47, the I/O apparatus selection signal SEL shown in Fig. 7A is output, and the I/O apparatus 41 which is to be accessed is selected. Then, as shown in Fig. 7B, the read or write signal RD or WR is output to the CPU request decoder 65. In response to the signal RD or WR, the CPU request decoder 65 outputs the signal ACK shown in Fig. 7D to the CPU 1 and outputs the interface circuit selection signal CSL shown in Fig. 7F to the continuous data guarantee circuit 51. The continuous data guarantee circuit 51 enables the signal HOLD shown in Fig. 7G in response to the clock signal CLK shown in Fig. 7E. As a result, since a $\overline{Q}$ output "0" from the F/F 83, and a Q output "1" from the F/F 85 are applied to the J-K F/F 87, Q and $\overline{Q}$ outputs (USEL and CSEL) from the F/F 87 are set at active low and active high, as shown in Figs. 7I and 7J, respectively. Therefore, even if the user request signal $\overline{UREQ}$ SHOWN IN Fig. 7H output from the user circuit 47 is set at active low, the user access permission signal (UEN) is not set at active, as shown in Fig. 7K.

Since a signal set at active high is input from the F/Fs 83 and 87 to the AND gate 91, the standby signal B shown in Fig. 7L is output to the request decoder 65. In addition, the CPU read or write signal LR or LW is supplied from the AND gate 93 or 95 to the bidirectional data control circuit 55. As a result, during a CPU read operation, the bidirectional data control circuit 55 outputs data on the bus 101 onto the bus 63. During a CPU write operation, the bidirectional data control circuit 55 outputs data on the bus 63 onto the bus 101. For example, when predetermined control data is completely supplied from the CPU 1 to the user circuit 47, the comparator 73 outputs the coincidence signal A shown in Fig. 7C. Therefore, the signal HOLD shown in Fig. 7G is enabled at the trailing edge of the coincidence signal A.

On the other hand, when an access request is supplied from only the user circuit 47, the user request signal $\overline{UREQ}$ shown in Fig. 7H is output from the user circuit 47, and the signal HOLD is inactive, as shown in Fig. 7G. Therefore, a $\overline{Q}$ output from the F/F 83 is set at "1", and a Q output from the F/F 85 is set at "0". As a result, as shown in Figs. 7I and 7J, signals USEL and CSEL set at "1" and "0" are output from the Q and $\overline{Q}$ output terminals of the J-K F/F 87, respectively. As a result, since signals set at "1" and "1" are respectively applied to the AND gate 89 from the F/Fs 87 and 85, the AND gate 89 outputs the active signal UEN, as shown in Fig. 7K. As shown in Fig. 7N, the user read or write signal RR or RW is supplied to the bidirectional data control circuit 55. As a result, when the user read signal RR is input, the bidirectional data control circuit 55 outputs data on the bus 63 onto the bus 101. When the user write signal WR is input, the bidirectional data control circuit 55 outputs data on the bus 101 onto the bus 63.

In the above embodiment, the address preset register 71 and the comparator 73 are arranged in the continuous data guarantee circuit 51. An address set in the address preset register 71 is compared with an address supplied from the CPU 1, and the coincidence signal A is applied to the J-K F/F 81 to reset the signal HOLD. However, a reset signal line may be arranged to supply a reset signal from the CPU 1 to the J-K F/F 81, or the J-K F/F 81 may be arranged by one bit (e.g., the LSB) of an address bus. In this case, the value of the LSB is changed from "0" to "1" depending on whether the address is even or odd, and hence 1-word control data can be assured.

Although the user circuit consists of a digital circuit in the above arrangement, an analog circuit can constitute the user circuit.

## Claims

1. A system for exchanging data between a programmable controller including a central processing unit (CPU) (1), a memory (3), and an I/O apparatus connected to said CPU through an inherent bus (9), and a user circuit (47) connected to said inherent bus of said programmable controller through said I/O apparatus, said I/O apparatus (45) comprising:
bidirectional data control means (55) including an internal memory accessible from said CPU and said user circuit;
arbitrating means (53) for executing an access request from said CPU prior to an access request from said user circuit when the access requests from said CPU and said user circuit contend with each other; and
continuous data guarantee means (51) for continuously executing the access request from said CPU in response to the access request from said CPU and address data correlated with the access.

2. A system according to claim 1, characterized in that said arbitrating means comprises means for outputting an access permission or non-permission signal with respect to the access request from said user circuit, and said continuous data guarantee means comprises holding means (71) for holding a preset address, comparing means (73) for comparing an address supplied from said CPU with a preset address held by said holding means to output a coincidence signal when the addresses coincide each other, and means for instructing said arbitrating means to output the non-permission signal until said CPU writes or reads out data comprising a plurality of words in or from said user circuit when the access requests from said CPU and said user circuit contend with each other.

3. A system according to claim 1, characterized in that said arbitrating means comprises means for outputting an access permission or non-permission signal to said user circuit with respect to an access request from said user circuit, and said continuous data guarantee means comprises means for instructing said arbitrating means to output the non-permission signal until a part of address data supplied from said CPU becomes a predetermined value when the access requests from said CPU and said user circuit contend with each other.

4. A system according to claim 3, characterized in that said continuous data guarantee means comprises means for detecting that lower one bit of the address data supplied from said CPU is changed from one value to another value, and means for instructing said arbitrating means to output the non-permission signal until a change in value of the bit is detected by said detecting means when the access requests from said CPU and said user circuit contend with each other.

5. A system according to claim 1, characterized in that said arbitrating means comprises means for outputting an access permission or non-permission signal to said user circuit with respect to an access request from said user circuit, and said continuous data guarantee means comprises means for instructing said arbitrating means to output the non-permission signal until a specific signal is output form said CPU when the access requests from said CPU and from said user circuit contend with each other.

6. A system according to claim 1, characterized in that said I/O apparatus can incorporate said user circuit.

FIG. 1

EP 0 363 905 A2

FIG. 2

EP 0 363 905 A2

F I G. 3

READ

FIG. 4A
ADR

FIG. 4B
SEL

FIG. 4C
RD

FIG. 4D
DAT

FIG. 4E
ACK

EP 0 363 905 A2

FIG.5A ADR

FIG.5B SEL

FIG.5C WR

FIG.5D DAT

FIG.5E ACK

WRITE

FIG. 6

EP 0 363 905 A2

FIG. 7A    SEL

FIG. 7B    RD/WR (R/W)

FIG. 7C    A

FIG. 7D    ACK

FIG. 7E    CLK

FIG. 7F    CSL

FIG. 7G    HOLD

FIG. 7H    $\overline{\text{UREQ}}$

FIG. 7I    USEL

FIG. 7J    CSEL

FIG. 7K    UEN

FIG. 7L    B

FIG. 7M    LR/LW

FIG. 7N    RR/RW

ACCESS FROM
PROGRAMMABLE
CONTROLLER

ACCESS FROM
USER CIRCUIT

EP 0 363 905 A2